(19) Europäisches Patentamt / European Patent Office / Office européen des brevets

(11) **EP 4 160 725 B1**

(12) **EUROPEAN PATENT SPECIFICATION**

(45) Date of publication and mention of the grant of the patent:
**29.07.2026 Bulletin 2026/31**

(21) Application number: **22816477.8**

(22) Date of filing: **02.06.2022**

(51) International Patent Classification (IPC):
***H01M 4/131*** *(2010.01)* ***H01M 4/1391*** *(2010.01)*
***H01M 4/525*** *(2010.01)* ***H01M 4/587*** *(2010.01)*
***H01M 4/62*** *(2006.01)* ***H01M 10/0525*** *(2010.01)*
***H01M 4/36*** *(2006.01)* ***H01M 4/48*** *(2010.01)*

(52) Cooperative Patent Classification (CPC):
**H01M 4/131; H01M 4/1391; H01M 4/364; H01M 4/483; H01M 4/525; H01M 4/587; H01M 4/62; H01M 10/0525;** H01M 2004/021; Y02E 60/10

(86) International application number:
**PCT/KR2022/007848**

(87) International publication number:
**WO 2022/255818 (08.12.2022 Gazette 2022/49)**

(54) **CATHODE FOR LITHIUM SECONDARY BATTERY AND LITHIUM SECONDARY BATTERY COMPRISING SAME**

KATHODE FÜR LITHIUMSEKUNDÄRBATTERIE UND LITHIUMSEKUNDÄRBATTERIE DAMIT

CATHODE POUR BATTERIE SECONDAIRE AU LITHIUM ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2021 KR 20210071877**

(43) Date of publication of application:
**05.04.2023 Bulletin 2023/14**

(73) Proprietor: **LG Energy Solution, Ltd.**
**Seoul 07335 (KR)**

(72) Inventors:
- **JO, Chi Ho**
  **Daejeon 34122 (KR)**
- **JUNG, Wang Mo**
  **Daejeon 34122 (KR)**
- **KIM, Hye Hyeon**
  **Daejeon 34122 (KR)**
- **YOO, Tae Gu**
  **Daejeon 34122 (KR)**
- **HWANG, Jin Tae**
  **Daejeon 34122 (KR)**
- **JUNG, Hae Jung**
  **Daejeon 34122 (KR)**
- **HEO, Jong Wook**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**CN-A- 112 447 963**
**KR-A- 20130 079 109**
**KR-A- 20190 064 424**
**KR-A- 20190 079 534**
**KR-A- 20190 079 534**
**KR-A- 20200 066 048**
**US-A1- 2020 144 659**

- **NDAMA ADOUM TRAORÉ ET AL: "Measurement of Electrical Resistivity of Powder; Comparison of Three Methods", vol. 69, no. 8, 1 August 2021 (2021-08-01), pages 41 - 48, XP093038241, Retrieved from the Internet <URL:https://ijettjournal.org/assets/Volume-69/Issue-8/IJETT-V69I8P206.pdf> DOI: 10.14445/22315381/IJETT-V69I8P206**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **ANONYMOUS: "Analysis of Resistivity of Commonly Used Positive and Anode Materials for Lithium Battery", 10 June 2021 (2021-06-10), XP093203811, Retrieved from the Internet <URL:https://www.iesttech.com/en/NewsDetail/2757385.html>**

## Description

[Technical Field]

The present invention relates to a positive electrode for a lithium secondary battery and a lithium secondary battery including the same.

[Background Art]

The present invention relates to a positive electrode for a lithium secondary battery and a lithium secondary battery including the same.

[Background]

Recently, the demand for secondary batteries as an energy source is rapidly increasing. Among these secondary batteries, lithium secondary batteries that have a high energy density, a high operating potential, a long cycle life and a low self-discharging rate have been widely studied, commercialized and used in various fields.

Graphite is mainly used as a negative electrode material for a lithium secondary battery, but has a small capacity per unit mass of 372 mAh/g, so it is difficult to increase the capacity of a lithium secondary battery. Accordingly, a high capacity lithium secondary battery has been developed using a non-carbon negative electrode material having a higher energy density than graphite, such as a negative electrode material that forms an intermetallic compound with lithium, such as silicon, tin and their oxides. However, such a non-carbon-based negative electrode material has a large capacity but low initial efficiency, so there is a problem in that the amount of lithium composition during initial charging/discharging is large, and the irreversible capacity loss is large.

In this regard, a method for overcoming the irreversible capacity loss of a negative electrode was suggested using a material that can provide a lithium ion source or reservoir to a positive electrode material and electrochemically exhibit activity after the first cycle so as not to degrade the entire performance of a battery. Specifically, a method of applying an oxide containing an excess of lithium, for example, $Li_6CoO_4$, to the positive electrode as a sacrificial positive electrode material or an irreversible additive (or an overdischarge inhibitor) is known.

Meanwhile, a conventional irreversible additive such as $Li_6CoO_4$ is generally prepared by reacting a metal oxide such as cobalt oxide with excess lithium oxide. The irreversible additive prepared as described above is structurally unstable and generates a large amount of oxygen gas ($O_2$) as charging progresses, and in the initial charging of a secondary battery, that is, the activation of a battery, when the irreversible additive does not react completely and remains, a reaction in the subsequent charging/discharging process may occur, causing side reactions or generating a large amount of oxygen gas in the battery. The oxygen gas generated as described above may cause volume expansion of an electrode assembly, acting as one of the main factors causing the deterioration of battery performance.

$$Li_6CoO_4 \rightarrow Li_4CoO_4 \xrightarrow{O_2\,generation} Li_1CoO_{2.5} \xrightarrow{O_2\,generation} CoO_2$$

In addition, a typically used irreversible additive exhibits a very low powder electrical conductivity of up to $10^{-11}$ S/cm, which is almost close to an insulator, due to a 2D percolating network. Such a low powder electrical conductivity increases the electrical resistance of the positive electrode. In this case, while a large capacity of 200 mAh/g or more is shown at a low C-rate, when the C-rate increases, as charging/discharging proceeds, performance is rapidly decreased due to a large resistance, so there is a limitation in that the charge/discharge capacity of the battery is decreased, and high-speed charging/discharging is difficult.

Accordingly, there is a demand for the development of a lithium secondary battery having excellent electrical performance as well as improved battery safety.

KR 10-2019-0079534 A describes a lithium secondary battery, comprising: an anode composed of a single layer of an anode current collector; a cathode containing a cathode mixture formed on a cathode current collector; a separator interposed between the anode and the cathode; and an electrolyte, wherein the cathode mixture comprises an irreversible compensating additive.

CN 112 447 963 A describes a method for preparing a lithium supplementing conductive slurry for a lithium ion battery positive electrode that comprises the steps of uniformly mixing a positive electrode lithium supplementing material, a conductive agent, a dispersing agent and a solvent to obtain a mixture; and carrying out ball milling on the mixture until the average particle size of the positive electrode lithium supplementing material reaches 50-5000 nm, and forming uniform lithium supplementing conductive slurry.

[Related Art Documents]

[Patent Documents]

Korean Unexamined Patent Application Publication No.10-2019-0064423

KR 10-2019-0079534 A
CN 112 447 963 A

[Technical Problem]

Therefore, the present invention is directed to providing a positive electrode for a lithium secondary battery, the positive electrode effectively improving the electrical properties of the lithium secondary battery and improving safety, and the present invention is further directed to a lithium secondary battery including the same.

[Technical Solution]

To solve the above problems,
one aspect of the present invention provides a positive electrode for a lithium secondary battery, the positive electrode including:

a positive electrode current collector, and
a positive electrode mixture layer disposed on the positive electrode current collector, wherein the positive electrode mixture layer includes a positive electrode active material that is a lithium metal composite oxide represented by Formula 2 below, a positive electrode additive represented by Formula 1 below, a conductive material and a binder,

[Formula 1] $Li_pCo_{(1-q)}M^1_qO_4$

wherein,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively;

[Formula 2] $Li_x[Ni_yCo_zMn_wM^2_v]O_u$

wherein,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively,
wherein the following Equation 1 is satisfied with 1.55 or less:

[Equation 1]

$$R_{LCZO}/R_0$$

wherein,

$R_{LCZO}$ represents an electrode sheet resistance when the positive electrode additive represented by Formula 1 is contained in the positive electrode mixture layer, and
$R_0$ represents an electrode sheet resistance when the positive electrode additive represented by Formula 1 is not contained in the positive electrode mixture layer,
wherein electrode sheet resistance is measured by a 4-point probe method.

Specifically, in the case of the positive electrode for a lithium secondary battery, Equation 1 may be 1.3 or less.

In addition, the positive electrode additive may have a tetragonal structure with a space group of $P4_2/nmc$.

Moreover, the content of the positive electrode additive may be 0.1 to 10 parts by weight with respect to 100 parts by weight of the positive electrode mixture layer.

Moreover, the conductive material may include or be one or more selected from the group consisting of activated carbon, natural graphite, artificial graphite, carbon black, acetylene black, Denka Black, Ketjen black, Super-P, channel black, furnace black, lamp black, thermal black, graphene, and carbon nanotubes.In addition, the conductive material may be included in an amount of 0.1 to 5 parts by weight with respect to 100 parts by weight of the positive electrode mixture layer.

In addition, another aspect of the present invention provides a method of manufacturing the positive electrode for a lithium secondary battery, the method including:

preparing a pre-dispersion by mixing a positive electrode additive represented by Formula 1 below, a conductive material and a binder, wherein the preparing of the pre-dispersion is performed at a relative humidity of 10% or less and under a temperature of 40 °C or less;
preparing a positive electrode slurry by mixing the pre-dispersion, a positive electrode active material that is a lithium metal composite oxide represented by Formula 2 below and the binder; and
forming a positive electrode mixture layer by applying the positive electrode slurry on the positive electrode current collector,

[Formula 1] $Li_pCo_{(1-q)}M^1_qO_4$

In Formula 1,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively;

[Formula 2] $Li_x[Ni_yCo_zMn_wM^2_v]O_u$

wherein,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

Further, still another aspect of the present invention provides
a lithium secondary battery which includes the positive electrode according to the present invention; a negative electrode; and a separator disposed between the positive electrode and the negative electrode.

Here, the negative electrode may include a negative electrode current collector and a negative electrode mixture layer disposed on the negative electrode current collector, wherein the negative electrode mixture layer includes a negative electrode active material, wherein the negative electrode active material may contain a carbon material and a silicon material.

In addition, the silicon material may include one or more of silicon (Si) particles and silicon oxide ($SiOx$, $1 \leq x \leq 2$) particles, and the silicon material maybe included at 1 to 20 parts by weight with respect to 100 parts by weight of the negative electrode mixture layer.

[Advantageous Effects]

A positive electrode for a lithium secondary battery according to the present invention is manufactured using a pre-dispersion containing the positive electrode additive represented by Formula 1 in a positive electrode mixture layer as an irreversible additive, and by adjusting the electrode sheet resistance ratio according to the use of the positive electrode additive to satisfy a specific range, there are advantages in that not only the amount of oxygen gas generated during charging/discharging can be reduced, but also the charging/discharging efficiency of the lithium secondary battery can be easily improved.

[Brief Description of the Drawings]

FIG. 1 is a graph illustrating the sheet resistances of the positive electrodes manufactured in Example 1, and Comparative Examples 1 and 2.

[Detailed Description]

The present invention may have various modifications and various examples, and thus specific examples are illustrated in the drawings and described in detail in the detailed description.

The terms "comprise," "include" and "have" used herein designate the presence of characteristics, numbers, steps, actions, components or members described in the specification or a combination thereof, but it should be understood that these terms do not preclude the possibility of the presence or addition of one or more other characteristics, numbers, steps, actions, components, members or a combination thereof.

In addition, when a part of a layer, film, region or plate is disposed "on" another part, this includes not only a case in which one part is disposed "directly on" another part, but also a case in which still another part is interposed therebetween. In contrast, when a part of a layer, film, region or plate is disposed "under" another part, this includes not only a case in which one part is disposed "directly under" another part, but also a case in which still another part is interposed therebetween. In addition, in this application, "on" may include not only a case of disposed on an upper part but also a case of disposed on a lower part.

Moreover, the "main component" used herein may be a component contained at 50 wt% or more, 60 wt% or more, 70 wt% or more, 80 wt% or more, 90 wt% or more, 95 wt% or more, or 97.5 wt% or more with respect to the total weight of a composition or specific component, and in some cases, when the main component constitutes the entire composition or specific component, it may be contained at 100 wt%.

In addition, the therm "Ah" as used herein refers to a capacity unit of a lithium secondary battery, and is also called "ampere hour," meaning a current amount per hour. For example, when the battery capacity is "3000 mAh," it means that a battery can be discharged with a current of 3000 mA for 1 hour.

Hereinafter, the present invention will be described in further detail.

## Positive electrode for lithium secondary battery

In one embodiment of the present invention, a positive electrode for a lithium secondary battery includes:

a positive electrode current collector, and
a positive electrode mixture layer disposed on the positive electrode current collector and containing a positive electrode active material, a positive electrode additive, a conductive material and a binder.

The positive electrode for a lithium secondary battery according to the present invention includes a positive electrode mixture layer prepared by coating, drying and pressing a positive electrode slurry on a positive electrode current collector, and the positive electrode mixture layer has a configuration containing a positive electrode active material, a positive electrode additive, a conductive material and a binder.

Here, the positive electrode additive is a lithium cobalt oxide represented by Formula 1 below:

[Formula 1] $Li_pCo_{(1-q)}M^1{}_qO_4$

wherein,
$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively.

The positive electrode additive may contain lithium in excess to provide lithium for lithium consumption caused by an irreversible chemical and physical reaction at a negative electrode upon initial charging, i.e., activation, thereby increasing charge capacity, reducing irreversible capacity, and improving lifetime characteristics.

Among positive electrode additives, the positive electrode additive represented by Formula 1 may have a higher content of lithium ions than a nickel-containing oxide that is commonly used in the art, and thus be replenish lithium ions lost through an irreversible reaction during the initial activation of the battery, so that the charge/discharge capacity of the battery can be significantly improved. In addition, compared to the iron and/or manganese-containing oxide(s) commonly used in the art, there is no side reaction caused by the elution of a transition metal during the charging/discharging of the battery, so excellent stability of the battery is exhibited. Examples of the lithium cobalt oxides represented by Formula 1

may include $Li_6CoO_4$, $Li_6Co_{0.5}Zn_{0.5}O_4$, and $Li_6Co_{0.7}Zn_{0.3}O_4$.

In addition, the lithium cobalt oxide represented by Formula 1 may have a tetragonal crystalline structure, and among the tetragonal crystal structures, may be included in a space group of $P4_2/nmc$ having a twisted tetrahedral structure consisting of a cobalt element and an oxygen element. Since the positive electrode additive has a twisted tetrahedral structure consisting of a cobalt element and an oxygen element and thus is structurally unstable, when the positive electrode additive is used at 5 parts by weight with respect to 100 parts by weight of the positive electrode mixture layer in the manufacture of a positive electrode, side reactions with moisture or oxygen in the air may be caused in the mixing process of the positive electrode slurry. However, the present invention has an advantage in that side reactions of the positive electrode additive with moisture or oxygen in the air can be prevented by using a composition in which a positive electrode additive is predispersed with a conductive material in the preparation of the positive electrode slurry.

Moreover, the positive electrode additive may be included in an amount of 0.1 to 10 parts by weight, and specifically, 0.1 to 8 parts by weight; 0.1 to 5 parts by weight; 1 to 10 parts by weight; 2 to 10 parts by weight; 5 to 10 parts by weight; 2 to 8 parts by weight; 3 to 7 parts by weight; or 4 to 5.5 parts by weight with respect to 100 parts by weight of the positive electrode mixture layer. **In** the present invention, by adjusting the content of the positive electrode additive within the above range, the decrease in charge/discharge capacity caused by insufficient supplementation of lithium ions lost by the irreversible reactions due to a low content of the positive electrode additive may be prevented, and it is possible to prevent a large amount of oxygen gas from being generated during the charging/discharging of the battery due to excess positive electrode additive.

Further, the positive electrode for a lithium secondary battery may exhibit a low electrode sheet resistance even when containing a positive electrode additive represented by Formula 1, and therefore, excellent performance may be realized during charging/discharging of the battery.

Specifically, irreversible additives generally used in the art have a significantly low electrical conductivity of approximately $10^{-11}$ S/cm, so there is a problem in that the resistance imparted to the electrode during charging/discharging of the battery is high. However, even while including the positive electrode additive represented by Formula 1 in the positive electrode mixture layer, the positive electrode for a lithium secondary battery according to the present invention may exhibit a low sheet resistance in a predetermined range. The positive electrode satisfies Equation 1 below representing the ratio ($R_{LCO}/R_0$) of the electrode sheet resistance ($R_{LCO}$) of a positive electrode containing the positive electrode additive represented by Formula 1 to the electrode sheet resistance ($R_0$) of a positive electrode not containing the positive electrode additive represented by Formula 1 with a value of 1.55 or less, and specifically, 1.5 or less, 1.4 or less, 1.3 or less, 1.2 or less, 0.2 to 1.5; 0.5 to 1.5; 0.8 to 1.5; or 0.8 to 1.3:

[Equation 1]

$$R_{LCZO}/R_0$$

wherein,

$R_{LCZO}$ represents an electrode sheet resistance when the positive electrode additive represented by Formula 1 is contained in the positive electrode mixture layer, and
$R_0$ represents an electrode sheet resistance when the positive electrode additive represented by Formula 1 is not contained in the positive electrode mixture layer.

Meanwhile, the positive electrode active material is a positive electrode active material enabling irreversible intercalation and deintercalation, and includes a lithium metal composite oxide represented by Formula 2 below as a main component:

[Formula 2] $Li_x[Ni_yCo_zMn_wM^2_v]O_u$

wherein,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \le x \le 1.30$, $0.1 \le y < 0.95$, $0.01 < z \le 0.5$, $0.01 < w \le 0.5$, $0 \le v \le 0.2$, and $1.5 \le u \le 4.5$, respectively.

The lithium metal composite oxide represented by Formula 2 is a composite metal oxide including lithium and nickel and may include one or more compounds selected from the group consisting of $LiNi_{1/3}Co_{1/3}Mn_{1/3}O_2$, $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, and $LiNi_{0.7}Co_{0.1}Mn_{0.1}Al_{0.1}O_2$.

In addition, the content of the positive electrode active material may be 85 to 95 parts by weight, 88 to 95 parts by weight, 90 to 95 parts by weight, 86 to 90 parts by weight, or 92 to 95 parts by weight, with respect to 100 parts by weight of the positive electrode mixture layer.

Moreover, the conductive material may be used to improve the electrical performance of the positive electrode, and a conductive material that is conventionally used in the art, may be applied, specifically, one or more selected from the group consisting of activated carbon, natural graphite, artificial graphite, carbon black, acetylene black, Denka Black, Ketjen black, Super-P, channel black, furnace black, lamp black, thermal black, graphene, and carbon nanotubes.

As an example, as the conductive material, carbon black or Denka Black may be used alone or in combination.

In addition, the conductive material may be included in an amount of 0.1 to 5 parts by weight, and specifically, 0.1 to 4 parts by weight; 2 to 4 parts by weight; 1.5 to 5 parts by weight; 1 to 3 parts by weight; 0.1 to 2 parts by weight; or 0.1 to 1 part by weight, with respect to 100 parts by weight of the positive electrode mixture layer.

In addition, the binder serves to adhere a positive electrode active material, a positive electrode additive and a conductive material to each other, and any binder that has the above function can be used without particular limitation. Specifically, one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and a copolymer thereof may be included in the binder. In one example, the binder may include polyvinylidene fluoride.

In addition, with respect to a total of 100 parts by weight of the positive electrode mixture layer, the binder may be included in an amount of 1 to 10 parts by weight, and specifically, 2 to 8 parts by weight, or 1 to 5 parts by weight.

Moreover, the average thickness of the positive electrode mixture layer is not particularly limited, but specifically, may be 50 to 300 μm, and more specifically, 100 to 200 μm; 80 to 150 μm; 120 to 170 μm; 150 to 300 μm; 200 to 300 μm; or 150 to 190 μm.

In addition, in the positive electrode, a material that has high conductivity without causing a chemical change in the battery may be used as a positive electrode current collector. For example, as the positive electrode collector, stainless steel, aluminum, nickel, titanium, or calcined carbon may be used, and in the case of aluminum or stainless steel, one that is surface treated with carbon, nickel, titanium or silver may also be used. In addition, the positive electrode current collector may have fine irregularities formed on a surface thereof to increase the adhesion of the positive electrode active material, and may be formed in various shapes such as a film, a sheet, a foil, a net, a porous body, a foam body, and a non-woven fabric body. Moreover, the average thickness of the current collector may be appropriately applied within 3 to 500 μm in consideration of the conductivity and total thickness of the positive electrode to be manufactured.

## Method of manufacturing positive electrode for lithium secondary battery

Furthermore, one embodiment of the present invention provides a method of manufacturing the positive electrode for a lithium secondary battery, the method including:

preparing a pre-dispersion by mixing the positive electrode additive represented by Formula 1 below; a conductive material and a binder, wherein the preparing of the pre-dispersion is performed at a relative humidity of 10% or less and under a temperature of 40 °C or less;
preparing a positive electrode slurry by mixing the pre-dispersion, a positive electrode active material that is a lithium metal composite oxide represented by Formula 2 below and a binder; and
forming a positive electrode mixture layer by applying the positive electrode slurry on the positive electrode current collector,

[Formula 1] $Li_pCo_{(1-q)}M^1_qO_4$

wherein,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively;

[Formula 2] $Li_x[Ni_yCo_zMn_wM^2_v]O_u$

wherein,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respec-

tively.

The method of manufacturing a positive electrode for a lithium secondary battery according to the present invention may include preparing a pre-dispersion by first mixing a positive electrode additive represented by Formula 1, a conductive material and a binder, preparing a positive electrode slurry by additionally mixing the pre-dispersion with a positive electrode active material represented by Formula 2 and the binder, and forming a positive electrode mixture layer by applying the positive electrode slurry on a positive electrode current collector and drying the positive electrode slurry.

Here, the preparing of a pre-dispersion is a step of mixing a positive electrode additive, a conductive material and a binder, and may be performed by a conventional method used in the preparation of a slurry in the art. For example, the preparing of a pre-dispersion is performed by inputting each component into a homo mixer and stirring the resultant for 30 to 600 minutes at 1,000 to 5,000 rpm, and viscosity may be controlled by an additional solvent during the stirring. In one example, the pre-dispersion may be prepared by inputting the positive electrode additive represented by Formula 1, a conductive material and a binder to a homo mixer and injecting an N-methylpyrrolidone solvent while mixing the components at 3,000 rpm for 60 minutes to adjust a viscosity at 25±1 °C to 7,500±300 cps.

In addition, the preparing of a pre-dispersion may be performed at temperature and/or humidity condition(s) satisfying a specific range to prevent the structurally unstable positive electrode additive from being decomposed and/or damaged.

Specifically, the preparing of a pre-dispersion is performed under a temperature of 40 °C or less, and more specifically, 10 to 40 °C; 10 to 35 °C; 10 to 30 °C; 10 to 25 °C; 10 to 20 °C; 15 to 40 °C; 20 to 40 °C; 15 to 35 °C; or 18 to 30 °C.

In addition, the preparing of a pre-dispersion is performed at a relative humidity (RH) of 10% or less, and more specifically, 9% or less, 8% or less, 7% or less, 6% or less, 5% or less, 4% or less, 3% or less, 2% or less, or 1% or less.

In the present invention, by controlling the temperature and/or humidity condition(s) in the preparation of a pre-dispersion as described above, it is possible to prevent a decrease in irreversible activity due to side reactions with moisture and/or oxygen in the air that may occur in the process of mixing the fine particle-type positive electrode additive with a conductive material, and realize a low sheet resistance of the positive electrode mixture layer.

## Lithium secondary battery

Further, one embodiment of the present invention provides a lithium secondary battery, which includes the above-described positive electrode according to the present invention, a negative electrode and a separator interposed between the positive electrode and the negative electrode.

The lithium secondary battery according to the present invention includes the above-described positive electrode of the present invention, and thus not only has a low amount of oxygen gas generated during charging/discharging, but also exhibits excellent charging/discharging performance.

The lithium secondary battery of the present invention has a structure including a positive electrode, a negative electrode, and a separator interposed between the positive electrode and the negative electrode.

Here, the negative electrode may be manufactured by coating, drying and pressing a negative electrode active material on a negative electrode current collector, and may further selectively include a conductive material, an organic binder polymer or an additive, like the positive electrode, as needed.

In addition, the negative electrode active material may include, for example, a carbon material and a silicon material. The carbon material refers to a carbon material including a carbon atom as a main component, and examples of these carbon materials may include a graphite having a perfectly layered crystalline structure such as a natural graphite, a soft carbon having a low crystalline layered crystalline structure (graphene structure; a structure in which hexagonal honeycomb planes of carbon are arranged in layers) and a hard carbon in which the above-described structures are mixed with amorphous parts, artificial graphite, expanded graphite, a carbon nanofiber, non-graphitizing carbon, carbon black, acetylene black, Ketjen black, a carbon nanotube, a fullerene, activated carbon, and graphene, and preferably, one or more selected from the group consisting of a natural graphite, artificial graphite and a carbon nanotube. More preferably, the carbon material includes natural graphite and/or artificial graphite and may include any one or more of carbon black and carbon nanotubes in addition to the natural graphite and/or artificial graphite. In this case, the carbon material may include 0.1 to 10 parts by weight, and more specifically, 0.1 to 5 parts by weight or 0.1 to 2 parts by weight of carbon black and/or carbon nanotubes with respect to a total of 100 parts by weight of the carbon material.

In addition, the silicon material is a particle including silicon (Si), which is a metal component, as a main component, and may include one or more of silicon (Si) particles and silicon oxide ($SiO_X$, $1 \le X \le 2$) particles. In one example, the silicon material may include silicon (Si) particles, silicon monoxide (SiO) particles, silicon dioxide ($SiO_2$) particles, or a mixture thereof.

Moreover, the silicon material may have a form in which crystalline particles and amorphous particles are mixed, and the proportion of the amorphous particles may be 50 to 100 parts by weight, and specifically, 50 to 90 parts by weight; 60 to 80 parts by weight, or 85 to 100 parts by weight with respect to a total of 100 parts by weight of the silicon material. In

the present invention, thermal stability and flexibility may be improved without degrading the electrical properties of an electrode by controlling the proportion of the amorphous particles included in the silicon material in the above range.

In addition, the silicon material contains a carbon material and a silicon material, and may be included in an amount of 1 to 20 parts by weight, and particularly, 5 to 20 parts by weight; 3 to 10 parts by weight; 8 to 15 parts by weight; 13 to 18 parts by weight; or 2 to 7 parts by weight with respect to 100 parts by weight of the negative electrode mixture layer.

In the present invention, an amount of lithium consumption and an irreversible capacity loss during the initial charging/discharging of the battery may be reduced and a charge capacity per unit mass may also be improved by adjusting the contents of the carbon material and the silicon material included in the negative electrode active material to the above range.

In one example, the negative electrode active material may include 95±2 parts by weight of graphite and 5±2 parts by weight of a mixture in which silicon monoxide (SiO) particles and silicon dioxide ($SiO_2$) particles are uniformly mixed with respect to 100 parts by weight of the negative electrode mixture layer. In the present invention, an amount of lithium consumption and an irreversible capacity loss during the initial charging/discharging of the battery may be reduced and a charge capacity per unit mass may also be improved by adjusting the contents of the carbon material and the silicon material included in the negative electrode active material to the above range.

In addition, the negative electrode mixture layer may have an average thickness of 100 to 200 μm, and specifically, 100 to 180 μm, 100 to 150 μm, 120 to 200 μm, 140 to 200 μm, or 140 to 160 μm.

Moreover, the negative electrode current collector is not particularly limited as long as it does not cause a chemical change in the battery and has high conductivity, and for example, copper, stainless steel, nickel, titanium, or calcined carbon may be used, in the case of copper or stainless steel, one whose surface is treated with carbon, nickel, titanium or silver may be used. In addition, the negative electrode current collector, like the positive electrode current collector, has fine irregularities on a surface to reinforce the adhesion of the negative electrode active material and may be formed in various shapes such as a film, a sheet, a foil, a net, a porous body, a foam body, and a non-woven fabric body. In addition, the average thickness of the negative electrode current collector may be suitably applied within 3 to 500 μm in consideration of the conductivity and total thickness of the negative electrode to be manufactured.

In addition, as the separator, an insulating thin film in used, which is interposed between a positive electrode and a negative electrode and has high ion permeability and mechanical strength. The separator is not particularly limited as long as it is conventionally used in the art, and specifically, a sheet or non-woven fabric made of chemically-resistant and hydrophobic polypropylene, glass fiber, or polyethylene may be used. In some cases, a composite separator in which a porous polymer base material such as a sheet or non-woven fabric coated with inorganic/organic particles by an organic binder polymer may be used. When a solid electrolyte such as a polymer is used as an electrolyte, the solid electrolyte may also serve as a separator. Moreover, the separator may have a pore diameter of 0.01 to 10 μm and a thickness of 5 to 300 μm on average.

Meanwhile, the positive electrode and the negative electrode may be wound in a jelly roll shape and accommodated in a cylindrical, prismatic or pouch-type battery, or accommodated in a pouch-type battery in a folding or stack-and-folding form, but the present invention is not limited thereto.

In addition, a lithium salt-containing electrolyte according to the present invention may consist of an electrolyte and a lithium salt, and as the electrolyte, a non-aqueous organic solvent, an organic solid electrolyte, or an inorganic solid electrolyte may be used.

As the non-aqueous organic solvent, for example, aprotic organic solvents such as N-methyl-2-pyrrolidone, ethylene carbonate, propylene carbonate, butylene carbonate, dimethyl carbonate, diethyl carbonate, γ-butyrolactone, 1,2-dimethyoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl citrate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

As the organic solid electrolyte, for example, polymers such as a polyethylene derivative, a polyethylene oxide derivative, a polypropylene oxide derivative, a phosphoric acid ester polymer, poly alginate lysine, polyester sulfide, polyvinyl alcohol, polyvinylidene fluoride, and polymers including an ionic dissociation group may be used.

As the inorganic solid electrolyte, for example, a nitride, halide or sulfate of lithium such as $Li_3N$, LiI, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$ may be used.

The lithium salt is a material that is readily soluble in the non-aqueous electrolyte, and may be, for example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lower aliphatic carboxylic acid lithium, lithium 4-phenylborate, or a lithium imide.

In addition, to improve charging/discharging characteristics and flame retardancy, for example, pyridine, triethylphosphite, triethanolamine, cyclic ether, ethylene diamine, n-glyme, hexamethylphosphoric acid triamine, a nitrobenzene derivative, sulfur, a quinone imine dye, N-substituted oxazolidinone, N, N-substituted imidazolidine, ethylene glycol dialkyl ether, an ammonium salt, pyrrole, 2-methoxy ethanol, or aluminum trichloride may be added to the electrolyte. In some cases, to impart non-flammability, a halogen-containing solvent such as carbon tetrachloride or

ethylene trifluoride may be further included, and to improve high-temperature storage properties, carbon dioxide gas may be further included, and fluoro-ethylene carbonate (FEC) or propene sultone (PRS) may be also included.

[Examples]

Hereinafter, the present invention will be described in further detail with reference to examples and an experimental example.

**Example 1. Manufacture of positive electrode for lithium secondary battery**

A pre-dispersion for manufacturing a positive electrode was prepared by injecting N-methylpyrrolidone into a homo mixer, inputting 5 parts by weight of a positive electrode additive $Li_6Co_{0.7}Zn_{0.3}O_4$; 2 parts by weight of a conductive material carbon black; and 1 part by weight of a binder PVdF with respect to 100 parts by weight of a positive electrode slurry solid content, and performing primary mixing at 2,000 rpm for 30 minutes. Here, in the preparation of the pre-dispersion, the temperature and humidity were adjusted to be 20 to 25 °C and 3%, respectively.
Subsequently, a positive electrode slurry for a lithium secondary battery was prepared by inputting 91 parts by weight of a positive electrode active material $LiNi_{0.6}Co_{0.2}Mn_{0.2}O_2$; and 1 part by weight of a binder PVdF, with respect to 100 parts by weight of the positive electrode slurry solid content, into a homo mixer containing the prepared pre-dispersion, and performing secondary mixing at 2,500 rpm for 30 minutes.
A positive electrode was manufactured by applying the prepared positive electrode slurry to one surface of an aluminum current collector, drying the slurry at 100 °C, and rolling the resultant. Here, the total thickness of the positive electrode mixture layer was 130 μm, and the total thickness of the manufactured positive electrode was approximately 200 μm.

**Comparative Example 1. Manufacture of positive electrode for lithium secondary battery**

A positive electrode for a lithium secondary battery was manufactured in the same manner as in Example 1, except that the positive electrode additive used in Example 1 was not used.

**Comparative Example 2. Manufacture of positive electrode for lithium secondary battery**

A positive electrode slurry for a lithium secondary battery was prepared by injecting N-methylpyrrolidone into a homo mixer, inputting 91 parts by weight of a positive electrode active material $LiNi_{0.6}Co_{0.2}Mn_{0.2}O_2$; 5 parts by weight of a positive electrode additive $Li_6Co_{0.7}Zn_{0.3}O_4$; 2 parts by weight of a conductive material carbon black; and 2 parts by weight of a binder PVdF with respect to 100 parts by weight of a positive electrode slurry solid content, and mixing them at 2,000 rpm for 60 minutes. Here, during the mixing, the temperature and humidity were adjusted to be 20 to 25 °C and 3%, respectively.
A positive electrode was manufactured by applying the prepared positive electrode slurry to one surface of an aluminum current collector, drying the slurry at 100 °C, and rolling the resultant. Here, the total thickness of the positive electrode mixture layer was 130 μm, and the total thickness of the manufactured positive electrode was approximately 200 μm.

**Comparative Example 3. Manufacture of positive electrode for lithium secondary battery**

A pre-dispersion for manufacturing a positive electrode was prepared by injecting N-methylpyrrolidone into a homo mixer, inputting 5 parts by weight of a positive electrode additive $Li_6Co_{0.7}Zn_{0.3}O_4$; and 1 part by weight of a binder PVdF, and mixing them at 2,000 rpm for 30 minutes. Here, during the preparation of the pre-dispersion, the temperature and humidity were adjusted to be 20 to 25 °C and 3%, respectively.
Subsequently, a positive electrode slurry for a lithium secondary battery was prepared by inputting 91 parts by weight of a positive electrode active material $LiNi_{0.6}Co_{0.2}Mn_{0.2}O_2$; 2 parts by weight of a conductive material carbon black; and 1 part by weight of a binder PVdF, into a homo mixer containing the prepared pre-dispersion, and performing secondary mixing at 2,500 rpm for 30 minutes.
A positive electrode was manufactured by applying the prepared positive electrode slurry to one surface of an aluminum current collector, drying the slurry at 100 °C, and rolling the resultant. Here, the total thickness of the positive electrode mixture layer was 130 μm, and the total thickness of the manufactured positive electrode was approximately 200 μm.

**Comparative Examples 4 and 5. Manufacture of positive electrode for lithium secondary battery**

A positive electrode for a lithium secondary battery was manufactured in the same manner as in Example 1, except that the temperature and the humidity were adjusted as shown in Table 1 below during the preparation of a pre-dispersion.

[Table 1]

| | Temperature | Relative humidity |
|---|---|---|
| Comparative Example 4 | 50 °C | 3% |
| Comparative Example 5 | 20~25 °C | 50% |

Example 2 and Comparative Examples 6 to 10. Manufacture of lithium secondary battery

Natural graphite and silicon (SiOx, $1 \leq x \leq 2$) particles as negative electrode active materials; and styrene butadiene rubber (SBR) as a binder were prepared, and a negative electrode slurry was prepared in the same manner as preparing the positive electrode slurry above. Here, the graphite used in preparation of a negative electrode mixture layer was natural graphite (average particle diameter: 0.01 to 0.5 μm), and silicon (SiOx) particles had an average particle diameter of 0.9 to 1.1 μm. A negative electrode was manufactured by coating one surface of a copper current collector with the prepared negative electrode slurry and drying and rolling the resultant at 100 °C. Here, the total thickness of the negative electrode mixture layer was 150 μm, and the total thickness of the manufactured negative electrode was approximately 250 μm.

A full cell was manufactured by stacking a separator (thickness: approximately 16 μm) consisting of a porous polyethylene (PE) film between the negative electrode and one of the positive electrodes manufactured in Example 1 and Comparative Examples 1 to 5 and injecting E2DVC as an electrolyte. Table 2 below shows batteries prepared in Example 2 and Comparative Examples 6-10 corresponding to positive electrodes prepared in Example 1 and Comparative Examples 1-5.

Here, the "E2DVC" refers to a type of carbonate-based electrolyte, which is a mixed solution in which lithium hexafluorophosphate ($LiPF_6$, 1.0M) and vinyl carbonate (VC, 2 wt%) are added to a mixture of ethylene carbonate (EC): dimethyl carbonate (DMC): diethyl carbonate (DEC) = 1:1:1 (volume ratio).

[Table 2]

| Positive electrode for lithium secondary battery | Lithium secondary battery |
|---|---|
| Example 1 | Example 2 |
| Comparative Example 1 | Comparative Example 6 |
| Comparative Example 2 | Comparative Example 7 |
| Comparative Example 3 | Comparative Example 8 |
| Comparative Example 4 | Comparative Example 9 |
| Comparative Example 5 | Comparative Example 10 |

**Experimental Examples**

In order to evaluate the performance of the positive electrode for a lithium secondary battery according to the present invention, the following experiment was performed.

a) Evaluation of electrode sheet resistance

The sheet resistance of each of the positive electrodes manufactured in Example 1 and Comparative Examples 1 to 5 was measured by a 4-point probe method, and the result is shown in Table 3 below and FIG. 1.

b) Evaluation of amount of oxygen gas degassed during charging/discharging

Initial charging (formation) was carried out at 55 °C under conditions of 3.5V and 1.0C t for the lithium secondary batteries manufactured in Example 2 and Comparative Examples 6 to 10, and the content of oxygen gas generated during

the initial charging was analyzed by degassing a gas generated from the positive electrode while the initial charging was performed. Then, by repeating charging/discharging 50 times at 45 °C under a 0.3C condition, the content of oxygen gas was further analyzed at each charging/discharging. The analyzed result is shown in Table 3 below.

c) Evaluation of charge/discharge capacity and retention rate

Each of the lithium secondary batteries manufactured in Example 2 and Comparative Examples 6 to 10 was charged up to a charge termination voltage of 4.2 to 4.25 V with a charging current of 0.1C at 25 °C and activated. Subsequently, the secondary battery was discharged to a discharge termination voltage of 2V with a discharging current of 0.1C, and an initial charge/discharge capacity per unit mass was measured.

Afterward, the secondary battery was repeatedly charged/discharged 50 times at 45 °C under 0.3C to measure capacity during charging/discharging, and after performing charging/discharging 50 times, a charge/discharge capacity retention rate was calculated. The result is shown in Table 3 below.

[Table 3]

| | Electrode resistance | Amount of oxygen gas | Initial | Capacity | | |
|---|---|---|---|---|---|---|
| | | | generation [ml/g] | | charging/discharge capacity [Ah] | retention rate |
| | Measured value [Ω/sq] | $R_{LCZO}/R_0$ | 1st charging/ discharging | 50th charging/ discharging | | |
| Example 2 | 2.4±0.25 | ≒1.2 | 86 | 12 | 103.2 | 92.5% |
| Comparative Example 6 | 2.0±0.1 | - | 20 | 14 | 98.3 | 88.8% |
| Comparative Example 7 | 5.5±0.5 | ≒ 2.75 | 116 | 40 | 100.1 | 89.1% |
| Comparative Example 8 | 3.2±0.02 | ≒ 1.6 | 91 | 19 | 101.8 | 88.9% |
| Comparative Example 9 | 3.4±0.1 | ≒ 1.7 | 101 | 68 | 100.6 | 86.5% |
| Comparative Example 10 | 3.3±0.02 | ≒ 1.65 | 107 | 78 | 99.5 | 85.7% |

Referring to Table 3 and FIG. 1, in the case of the positive electrode for a lithium secondary battery of the example manufactured according to the present invention, despite containing the positive electrode additive represented by Formula 1 in the positive electrode mixture layer, the sheet resistance of the electrode was so low that there was no significant difference from the sheet resistance ($R_0$) of the positive electrode not containing a positive electrode additive and the $R_{LCZO}/R_0$ value was less than 1.5. The lithium secondary battery of the example including this had not only a high initial charge/discharge capacity of 102 Ah or more, but also had a high capacity retention rate of 91% or more. In addition, it was confirmed that the lithium secondary battery had high safety as the amount of oxygen gas generated after initial charging/discharging was significantly reduced.

From the above result, the positive electrode for a lithium secondary battery according to the present invention was manufactured using a pre-dispersion containing the positive electrode additive represented by Formula 1 in the positive electrode mixture layer as an irreversible additive, and by adjusting the electrode sheet resistance ratio according to the use of the positive electrode additive to satisfy a specific range, there were advantages in that not only the amount of oxygen gas generated during charging/discharging was reduced, but also the charging/discharging efficiency of the lithium secondary battery was easily improved.

## Claims

**1.** A positive electrode for a lithium secondary battery, the positive electrode comprising:

a positive electrode current collector, and
a positive electrode mixture layer disposed on the positive electrode current collector, wherein the positive

electrode mixture layer comprises a positive electrode active material that is a lithium metal composite oxide represented by Formula 2 below, a positive electrode additive represented by Formula 1 below, a conductive material and a binder,

[Formula 1] $Li_pCo_{(1-q)}M^1_qO_4$

wherein,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5\leq p\leq 7$ and $0\leq q\leq 0.5$, respectively,

[Formula 2] $Li_x[Ni_yCo_zMn_wM^2_v]O_u$

wherein,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0\leq x\leq 1.30$, $0.1\leq y<0.95$, $0.01<z\leq 0.5$, $0.01<w\leq 0.5$, $0\leq v\leq 0.2$, and $1.5\leq u\leq 4.5$, respectively,
**characterised in that**
the following Equation 1 is 1.55 or less:

[Equation 1]

$$R_{LCZO}/R_0$$

wherein,

$R_{LCZO}$ represents an electrode sheet resistance when the positive electrode additive represented by Formula 1 is comprised in the positive electrode mixture layer, and
$R_0$ represents an electrode sheet resistance when the positive electrode additive represented by Formula 1 is not comprised in the positive electrode mixture layer,
wherein electrode sheet resistance is measured by a 4-point probe method.

**2.** The positive electrode of claim 1, wherein Equation 1 is 1.3 or less.

**3.** The positive electrode of claim 1, wherein the positive electrode additive has a tetragonal structure with a space group of $P4_2/nmc$.

**4.** The positive electrode of claim 1, wherein the content of the positive electrode additive is 0.1 to 10 parts by weight with respect to 100 parts by weight of the positive electrode mixture layer.

**5.** The positive electrode of claim 1, wherein the conductive material includes one or more selected from the group consisting of activated carbon, natural graphite, artificial graphite, carbon black, acetylene black, Denka Black, Ketjen black, Super-P, channel black, furnace black, lamp black, thermal black, graphene, and carbon nanotubes.

**6.** The positive electrode of claim 5, wherein the conductive material is comprised in an amount of 0.1 to 5 parts by weight with respect to 100 parts by weight of the positive electrode mixture layer.

**7.** A method of manufacturing the positive electrode for a lithium secondary battery of claim 1, the method comprising:

preparing a pre-dispersion by mixing a positive electrode additive represented by Formula 1 below, a conductive material and a binder, wherein the preparing of the pre-dispersion is performed at a relative humidity of 10% or less and under a temperature of 40 °C or less;
preparing a positive electrode slurry by mixing the pre-dispersion, a positive electrode active material that is a lithium metal composite oxide represented by Formula 2 below and the binder; and
forming a positive electrode mixture layer by applying the positive electrode slurry on a positive electrode current

collector,

[Formula 1] $Li_pCo_{(1-q)}M^1_qO_4$

wherein,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively,

[Formula 2] $Li_x[Ni_yCo_zMn_wM^2_v]O_u$

wherein,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

**8.** A lithium secondary battery comprising the positive electrode of claim 1, a negative electrode, and a separator located between the positive electrode and the negative electrode.

**9.** The lithium secondary battery of claim 8, wherein the negative electrode comprises:

a negative electrode current collector; and
a negative electrode mixture layer disposed on the negative electrode current collector, wherein the negative electrode mixture layer comprised a negative electrode active material,
wherein the negative electrode active material comprises a carbon material and a silicon material.

**10.** The lithium secondary battery of claim 9, wherein the silicon material comprises one or more of silicon (Si) particles and silicon oxide (SiOx, $1 \leq x \leq 2$) particles.

**11.** The lithium secondary battery of claim 9, wherein the silicon material is comprised in an amount of 1 to 20 parts by weight with respect to 100 parts by weight of the negative electrode mixture layer.

## Patentansprüche

**1.** Positive Elektrode für eine Lithiumsekundärbatterie, wobei die positive Elektrode umfasst:

einen positiven Eletrodenstromkollektor und
eine positive Elektrodenmischungsschicht, die auf dem positiven Elektrodenstromkollektor angeordnet ist, wobei die positive Elektrodenmischungsschicht ein positives Elektrodenaktivmaterial, das ein durch die nachstehende Formel 2 dargestelltes Lithiummetallmischoxid ist, ein durch die nachstehende Formel 1 dargestelltes positives Elektrodenadditiv, ein leitfähiges Material und ein Bindemittel umfasst,

[Formel 1] $Li_pCo_{(1-q)}M^1_qO_4$

worin

$M^1$ ein oder mehrere Elemente, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, ist und
P und q $5 \leq p \leq 7$ bzw. $0 \leq q \leq 0{,}5$ sind,

[Formel 2] $Li_x[Ni_yCo_zMn_wM^2_v]O_u$

worin

$M^2$ ein oder mehrere Elemente, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, ist und
x, y, z, w, v und u $1,0 \le x \le 1,30$, $0,1 \le y < 0,95$, $0,01 < z \le 0,5$, $0,01 < w \le 0,5$, $0 \le v \le 0,2$ bzw. $1,5 \le u \le 4,5$ sind,
**dadurch gekennzeichnet, dass**
die folgende Gleichung 1 1,55 oder weniger ergibt:

[Gleichung 1]

$$R_{LCZO}/R_0$$

worin

$R_{LCZO}$ einen Elektrodenschichtwiderstand darstellt, wenn das durch Formel 1 dargestellte positive Elektrodenadditiv in der positiven Elektrodenmischungsschicht enthalten ist, und
$R_0$ einen Elektrodenschichtwiderstand darstellt, wenn das durch Formel 1 dargestellte positive Elektrodenadditiv nicht in der positiven Elektrodenmischungsschicht enthalten ist,
wobei der Elektrodenschichtwiderstand durch ein 4-Punkt-Sondenverfahren gemessen wird.

**2.** Positive Elektrode nach Anspruch 1, wobei Gleichung 1 1,3 oder weniger ergibt.

**3.** Positive Elektrode nach Anspruch 1, wobei das positive Elektrodenadditiv eine tetragonale Struktur mit einer Raumgruppe $P4_2/nmc$ aufweist.

**4.** Positive Elektrode nach Anspruch 1, wobei der Gehalt des positiven Elektrodenadditivs 0,1 bis 10 Gewichtsteile in Bezug auf 100 Gewichtsteile der positiven Elektrodenmischungsschicht beträgt.

**5.** Positive Elektrode nach Anspruch 1, wobei das leitfähige Material eines oder mehrere, ausgewählt aus der Gruppe, bestehend aus Aktivkohle, Naturgraphit, künstlichem Graphit, Ruß, Acetylenruß, Denka-Ruß, Ketjen-Ruß, Super-P, Kanalruß, Ofenruß, Lampenruß, Thermalruß, Graphen und Kohlenstoffnanoröhrchen, einschließt.

**6.** Positive Elektrode nach Anspruch 5, wobei das leitfähige Material in einer Menge von 0,1 bis 5 Gewichtsteilen in Bezug auf 100 Gewichtsteile der positiven Elektrodenmischungsschicht enthalten ist.

**7.** Verfahren zur Herstellung der positiven Elektrode für eine Lithiumsekundärbatterie nach Anspruch 1, wobei das Verfahren umfasst:

Herstellen einer Vordispersion durch Mischen eines durch die nachstehende Formel 1 dargestellten positiven Elektrodenadditivs, eines leitfähigen Materials und eines Bindemittels, wobei das Herstellen der Vordispersion bei einer relativen Feuchtigkeit von 10 % oder weniger und unter einer Temperatur von 40°C oder weniger durchgeführt wird,
Herstellen einer positiven Elektrodenaufschlämmung durch Mischen der Vordispersion, eines positiven Elektrodenaktivmaterials, das ein durch die nachstehende Formel 2 dargestelltes Lithiummetallmischoxid ist, und des Bindemittels und
Bilden einer positiven Elektrodenmischungsschicht durch Auftragen der positiven Elektrodenaufschlämmung auf einen positiven Elektrodenstromkollektor,

[Formel 1] $Li_pCo_{(1-q)}M^1_qO_4$

worin

$M^1$ ein oder mehrere Elemente, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, ist und
p und q $5 \le p \le 7$ bzw. $0 \le q \le 0,5$ sind,

[Formel 2] $Li_x[Ni_yCo_zMn_wM^2_v]O_u$

worin

$M^2$ ein oder mehrere Elemente, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, ist und
x, y, z, w, v und u $1,0 \leq x \leq 1,30$, $0,1 \leq y < 0,95$, $0,01 < z \leq 0,5$, $0,01 < w \leq 0,5$, $0 \leq v \leq 0,2$ bzw. $1,5 \leq u \leq 4,5$ sind.

**8.** Lithiumsekundärbatterie, umfassend die positive Elektrode nach Anspruch 1, eine negative Elektrode und einen Separator, der sich zwischen der positiven Elektrode und der negativen Elektrode befindet.

**9.** Lithiumsekundärbatterie nach Anspruch 8, wobei die negative Elektrode umfasst:

einen negativen Eletrodenstromkollektor und
eine negative Elektrodenmischungsschicht, die auf dem negativen Elektrodenstromkollektor angeordnet ist,
wobei die negative Elektrodenmischungsschicht ein negatives Elektrodenaktivmaterial umfasst,
wobei das negative Elektrodenaktivmaterial ein Kohlenstoffmaterial und ein Siliciummaterial umfasst.

**10.** Lithiumsekundärbatterie nach Anspruch 9, wobei das Siliciummaterial eines oder mehrere von Silicium (Si)-Partikeln und Siliciumoxid (SiOx, $1 \leq x \leq 2$)-Partikeln umfasst.

**11.** Lithiumsekundärbatterie nach Anspruch 9, wobei das Siliciummaterial in einer Menge von 1 bis 20 Gewichtsteilen in Bezug auf 100 Gewichtsteile der negativen Elektrodenmischungsschicht enthalten ist.

## Revendications

**1.** Cathode pour une batterie secondaire au lithium, la cathode comprenant :

un collecteur de courant de cathode, et
une couche de mélange de cathode disposée sur le collecteur de courant de cathode, dans laquelle la couche de mélange de cathode comprend un matériau actif de cathode qui est un oxyde composite métal-lithium représenté par la formule 2 ci-dessous, un additif de cathode représenté par la formule 1 ci-dessous, un matériau conducteur et un liant,

[Formule 1] $Li_pCo_{(1-q)}M^1_qO_4$

dans laquelle

$M^1$ est un ou plusieurs éléments choisis dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et
p et q sont $5 \leq p \leq 7$ et $0 \leq q \leq 0,5$, respectivement,

[Formule 2] $Li_x[Ni_yCo_zMn_wM^2_v]O_u$

dans laquelle

$M^2$ est un ou plusieurs éléments choisis dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et
x, y, z, w, v et u sont $1,0 \leq x \leq 1,30$, $0,1 \leq y < 0,95$, $0,01 < z \leq 0,5$, $0,01 < w \leq 0,5$, $0 \leq v \leq 0,2$ et $1,5 \leq u \leq 4,5$, respectivement,
**caractérisée en ce que**
l'équation 1 suivante est inférieure ou égale à 1,55 :

[Équation 1]

$$R_{LCZO}/R_O$$

dans laquelle

$R_{LCZO}$ représente une résistance de couche d'électrode lorsque l'additif de cathode représenté par la formule 1 est compris dans la couche de mélange de cathode, et

$R_o$ représente une résistance de couche d'électrode lorsque l'additif de cathode représenté par la formule 1 n'est pas compris dans la couche de mélange de cathode,
dans laquelle la résistance de couche d'électrode est mesurée par une méthode de sonde à quatre points.

**2.** Cathode selon la revendication 1, dans laquelle l'équation 1 est inférieure ou égale à 1,3.

**3.** Cathode selon la revendication 1, dans laquelle l'additif de cathode présente une structure tétragonale avec un groupe d'espace de $P4_2/nmc$.

**4.** Cathode selon la revendication 1, dans laquelle la teneur en additif de cathode est comprise entre 0,1 et 10 parties en poids par rapport à 100 parties en poids de la couche de mélange de cathode.

**5.** Cathode selon la revendication 1, dans laquelle le matériau conducteur inclut un ou plusieurs matériaux choisis dans le groupe consistant en charbon actif, graphite naturel, graphite artificiel, noir de carbone, noir d'acétylène, Denka Black, Ketjen black, Super-P, noir de canal, noir de four, noir de lampe, noir thermique, graphène et nanotubes de carbone.

**6.** Cathode selon la revendication 5, dans laquelle le matériau conducteur est compris à raison de 0,1 à 5 parties en poids par rapport à 100 parties en poids de la couche de mélange de cathode.

**7.** Procédé destiné à fabriquer la cathode pour une batterie secondaire au lithium selon la revendication 1, le procédé comprenant :

préparer une pré-dispersion par mélange d'un additif de cathode représenté par la formule 1 ci-dessous, d'un matériau conducteur et d'un liant, dans lequel la préparation de la pré-dispersion est réalisée à une humidité relative inférieure ou égale à 10 % et sous une température inférieure ou égale à 40 °C ;
préparer une barbotine de cathode par mélange de la pré-dispersion, d'un matériau actif de cathode qui est un oxyde composite métal-lithium représenté par la formule 2 ci-dessous et du liant ; et
former une couche de mélange de cathode par application de la barbotine de cathode sur un collecteur de courant de cathode,

[Formule 1] $Li_pC_{O(1-q)}M^1_qO_4$

dans laquelle

$M^1$ est un ou plusieurs éléments choisis dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et
p et q sont $5 \leq p \leq 7$ et $0 \leq q \leq 0,5$, respectivement,

[Formule 2] $Li_x[Ni_yCo_zMn_wM^2_v]O_u$

dans laquelle

$M^2$ est un ou plusieurs éléments choisis dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et
x, y, z, w, v et u sont $1,0 \leq x \leq 1,30$, $0,1 \leq y < 0,95$, $0,01 < z \leq 0,5$, $0,01 < w \leq 0,5$, $0 \leq v \leq 0,2$, et $1,5 \leq u \leq 4,5$, respectivement.

**8.** Batterie secondaire au lithium comprenant la cathode selon la revendication 1, une anode et un séparateur situé entre la cathode et l'anode.

**9.** Batterie secondaire au lithium selon la revendication 8, dans laquelle l'anode comprend :

un collecteur de courant d'anode ; et
une couche de mélange d'anode disposée sur le collecteur de courant d'anode, dans laquelle la couche de mélange d'anode comprend un matériau actif d'anode,
dans laquelle le matériau actif d'anode comprend un matériau carbone et un matériau silicium.

**10.** Batterie secondaire au lithium selon la revendication 9, dans laquelle le matériau silicium comprend une ou plusieurs particules parmi des particules de silicium (Si) et des particules d'oxyde de silicium ($SiO_x$, $1 \leq x \leq 2$).

**11.** Batterie secondaire au lithium selon la revendication 9, dans laquelle le matériau silicium est compris à raison de 1 à 20 parties en poids par rapport à 100 parties en poids de la couche de mélange d'anode.

【FIG. 1】

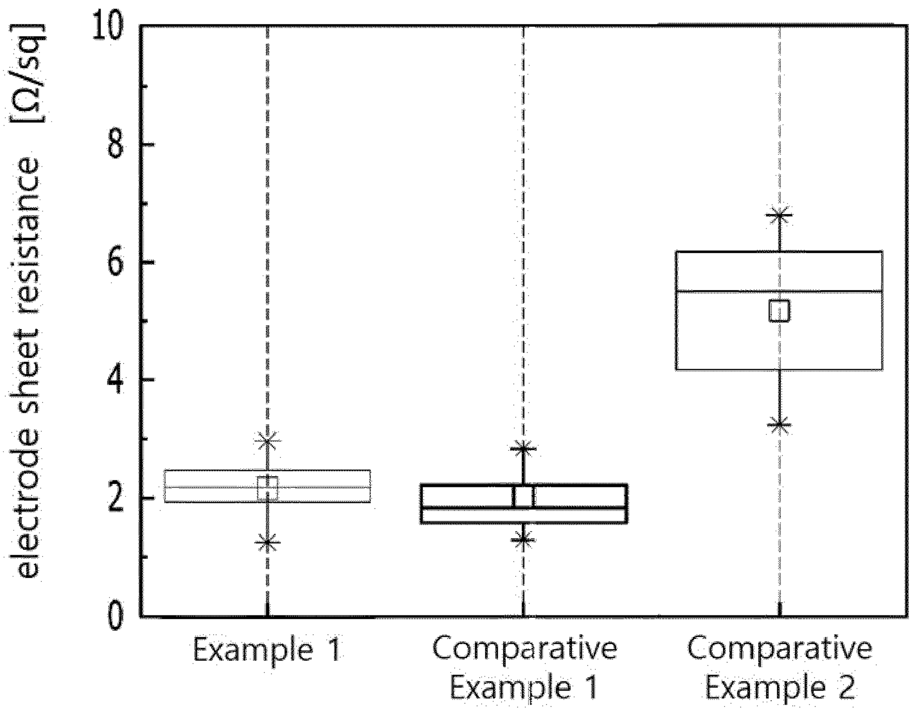
electrode sheet resistance [Ω/sq]
10
8
6
4
2
0
Example 1
Comparative Example 1
Comparative Example 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190079534 A
- CN 112447963 A
- KR 1020190064423